# EUROPÄISCHE PATENTSCHRIFT

(11) **EP 3 902 722 B1**
(45) Veröffentlichungstag und Bekanntmachung des Hinweises auf die Patenterteilung: **13.05.2026**
(21) Anmeldenummer: 19832386.7
(22) Anmeldetag: 20.12.2019
(51) Int. Cl.: B60S 1/52, B60S 1/38

(54) **WISCHBLATTVORRICHTUNG**
WIPER BLADE DEVICE
DISPOSITIF FORMANT BALAI D'ESSUIE-GLACE

(30) Priorität: 27.12.2018 DE 102018251713
(43) Veröffentlichungstag der Anmeldung: 03.11.2021
(73) Patentinhaber: Robert Bosch GmbH, 70442 Stuttgart (DE)
(72) Erfinder: CAMPSTEYN, Matthew, 3730 Hoeselt (BE); DEPONDT, Helmut, 3370 Boutersem (BE)
(86) Internationale Anmeldenummer: PCT/EP2019/086711
(87) Internationale Veröffentlichungsnummer: WO 2020/136120

(56) Entgegenhaltungen:
- WO-A1-2011/029660
- WO-A1-2020/064445
- FR-A1- 2 920 729
- US-A1- 2013 205 531
- US-A1- 2018 126 956
- US-B2- 9 802 576

## Beschreibung

### Stand der Technik

Es ist bereits eine Wischblattvorrichtung mit zumindest einer Windabweisereinheit mit zumindest einem Fluidkanal, welcher zumindest teilweise von der Windabweisereinheit ausgebildet ist, und mit zumindest einer Endkappeneinheit, welche dazu vorgesehen ist die Windabweisereinheit seitlich zu begrenzen und zumindest teilweise ein Ende der Windabweisereinheit abzudecken, vorgeschlagen worden.

Weiterer Stand der Technik ist mit der WO 11029660 A1, der US 9,802,576 B2, der US 2018/126956 A1, der US 2013/0205531 A1 und der FR 2 920 729 A1 bekannt geworden.

### Offenbarung der Erfindung

Die Erfindung geht aus von einer Wischblattvorrichtung mit zumindest einer Windabweisereinheit mit zumindest einem Fluidkanal, welcher zumindest teilweise von der Windabweisereinheit ausgebildet ist, und mit zumindest einer Endkappeneinheit, welche dazu vorgesehen ist die Windabweisereinheit seitlich zu begrenzen und zumindest teilweise ein Ende der Windabweisereinheit abzudecken. Die Erfindung wird in Anspruch 1 definiert.

Es wird vorgeschlagen, dass die zumindest eine Endkappeneinheit mehrteilig, insbesondere zweiteilig, ausgebildet ist und zumindest ein Endkappenelement und zumindest ein Dichtungselement aufweist, welches dazu vorgesehen ist ein der Endkappeneinheit zugewandtes Ende des zumindest einen Fluidkanal zumindest im Wesentlichen abzudichten, wobei das Endkappenelement zu einer Sicherung des Dichtungselements an der Windabweisereinheit vorgesehen ist.

Unter einer "Wischblattvorrichtung" soll in diesem Zusammenhang insbesondere zumindest ein Teil, insbesondere eine Unterbaugruppe, eines Wischblatts, insbesondere eines Scheibenwischblatts und vorteilhaft eines Fahrzeugscheibenwischblatts verstanden werden. Insbesondere kann die Wischblattvorrichtung auch das gesamte Wischblatt, insbesondere das gesamte Scheibenwischblatt und vorteilhaft das gesamte Fahrzeugscheibenwischblatt umfassen. Es ist denkbar, dass die Wischblattvorrichtung dabei zumindest als Teil eines Wischblatts in Flachbalkenbauweise als Wischblatt in Flachbalkenbauweise ausgebildet ist. Vorzugsweise ist die Wischblattvorrichtung zu einem Einsatz an einem Fahrzeug vorgesehen. Vorzugsweise ist die Wischblattvorrichtung zu einer Reinigung einer Fläche, insbesondere einer Scheibe an einem Fahrzeug vorgesehen. Insbesondere ist die Wischblattvorrichtung zu einer Reinigung einer Fahrzeugscheibe mit einem Fahrzeug, insbesondere einem Wischarm eines Fahrzeugs gekoppelt. Unter "gekoppelt" soll in diesem Zusammenhang insbesondere formschlüssig und/oder kraftschlüssig verbunden verstanden werden. Unter "vorgesehen" soll insbesondere speziell eingerichtet, speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Die Wischblattvorrichtung umfasst zumindest eine Windabweisereinheit. Unter einer "Windabweisereinheit" soll in diesem Zusammenhang insbesondere eine Einheit verstanden werden, die dazu vorgesehen ist, eine auf die Wischblattvorrichtung wirkende Luftanströmung beziehungsweise einen Fahrtwind abzuweisen und/oder für ein Anpressen des Wischblatts auf eine zu wischende Oberfläche zu nutzen. Vorzugsweise besteht die Windabweisereinheit zumindest teilweise aus Gummi und/oder aus einem wenigstens teilelastischen Kunststoff. Bevorzugt weist die Windabweisereinheit zumindest eine konkave Anströmfläche auf. Vorzugsweise ist die konkave Anströmfläche zumindest in einem montierten Zustand einer Fahrtrichtung zugewandt ausgebildet. Die Windabweisereinheit weicht insbesondere von einer Endkappe, einer Wischlippe und/oder von einem Wischblattadapter ab. Vorteilhaft erstreckt sich die Windabweisereinheit in einem Betriebszustand über zumindest einen Teil, vorzugsweise über zumindest einen Großteil der Erstreckung der Wischblattvorrichtung entlang ihrer Haupterstreckungsrichtung. Bevorzugt ist die Windabweisereinheit einteilig ausgebildet.

Vorzugsweise umfasst die Wischblattvorrichtung zumindest einen, bevorzugt zumindest zwei, insbesondere genau zwei, Fluidkanal/Fluidkanäle. Die Fluidkanäle sind insbesondere von Kanälen, bevorzugt von zylindrischen Kanälen, in der Windabweisereinheit gebildet. Die Fluidkanäle sind insbesondere materiell von der Windabweisereinheit begrenzt. Unter einem "Fluidkanal" soll insbesondere eine kanalartige Ausnehmung in zumindest einem Element der Wischblattvorrichtung, vorgesehen zur Führung eines Fluids, verstanden werden. Vorzugsweise kann der Fluidkanal zumindest eine Auslassöffnung, insbesondere eine Vielzahl von Auslassöffnungen, aufweisen, die zu einem Ausbringen von Fluid, insbesondere einer Waschflüssigkeit, vorgesehen ist. Bevorzugt ist der Fluidkanal in dem Betriebszustand dazu vorgesehen, an einem Ende des Fluidkanals ankommendes Fluid von dem einen Ende des Fluidkanals an ein dem einen Ende des Fluidkanals entgegengesetztes Ende des Fluidkanals zu transportieren, wobei das Fluid insbesondere den Fluidkanal durchströmt. Vorzugsweise ist die Wischblattvorrichtung, insbesondere der Fluidkanal, dazu vorgesehen Wischflüssigkeit in zumindest eine Wischrichtung abzugeben. Unter einer "Wischrichtung" soll vorteilhaft eine Richtung verstanden werden in welche sich das Wischblatt über eine Fläche, vorzugsweise eine Scheibe, insbesondere Fahrzeugscheibe, relativ zu der Fläche bewegt. Vorzugsweise weist der Fluidkanal einen zumindest im Wesentlichen kreisförmigen Querschnitt auf. Alternativ ist denkbar, dass der Fluidkanal einen polygonalen, insbesondere zumindest im Wesentlichen quadratischen, Querschnitt, einen elliptischen Querschnitt oder einen anderen, einem Fachmann als sinnvoll erscheinenden Querschnitt aufweist. Bevorzugt wird der Fluidkanal materiell von der Wischleisteneinheit begrenzt. Bevorzugt wird der Fluidkanal von der Windabweisereinheit begrenzt.

Die Windabweisereinheit bildet insbesondere zur Aufnahme der Endkappeneinheit zumindest teilweise einen Endabschnitt zur Aufnahme der Endkappeneinheit aus. Unter einem "Endabschnitt" soll insbesondere ein Teilstück der Windabweisereinheit und/oder der Wischblattvorrichtung verstanden werden, welches insbesondere direkt mit einem freien Ende der Windabweisereinheit in Verbindung steht und/oder das Ende der Windabweisereinheit umfasst. Der Endabschnitt weist insbesondere eine Erstreckung auf, welche sich vorteilhaft über maximal 20 %, vorzugsweise über maximal 15 %, bevorzugt über maximal 10 % und besonders bevorzugt über maximal 5 % einer maximalen Längserstreckung der Wischblattvorrichtung erstreckt. Der Endabschnitt ist insbesondere ein Abschnitt der Windabweisereinheit, welcher insbesondere dazu vorgesehen ist, die Endkappeneinheit zumindest teilweise aufzunehmen. Vorzugsweise weist die Windabweisereinheit zumindest zwei Endabschnitte und besonders bevorzugt genau zwei Endabschnitte auf.

Unter einer "Endkappe" soll insbesondere ein Abdeckungsbauteil verstanden werden, welches insbesondere zumindest zum Abdecken eines freien Endes und insbesondere des Endabschnitts der Windabweisereinheit vorgesehen ist. Die Endkappe ist, insbesondere zusammen mit der Windabweisereinheit, zu einer Steckmontage vorgesehen. Die Endkappeneinheit ist insbesondere zumindest für eine Steckmontage an einer Federschiene der Wischblattvorrichtung vorgesehen und/oder erstreckt sich über maximal 15 mm in eine Längsrichtung der Federschiene. Die zumindest eine Endkappeneinheit ist in einem montierten Zustand in einem Endabschnitt der zumindest einen Windabweisereinheit angeordnet. Unter einer "Haupterstreckungsrichtung" eines Objekts soll vorzugsweise eine Richtung verstanden werden, welche parallel zu einer längsten Kante eines Quaders verläuft, welcher das Objekt vollständig umschließt.

Die zumindest eine Endkappeneinheit bildet eine Begrenzung für den zumindest einen Fluidkanal, vorzugsweise für zumindest zwei, insbesondere genau zwei, Fluidkanäle, aus. Vorzugsweise bildet die Endkappeneinheit eine Begrenzung für den zumindest einen Fluidkanal an einem Ende der Haupterstreckung des Fluidkanals aus. Die zumindest eine Endkappeneinheit ist dazu vorgesehen den zumindest einen Fluidkanal fluiddicht, insbesondere zumindest wasserdicht, abzudichten.

Vorzugsweise umfasst die zumindest eine Endkappeneinheit ein Dichtungselement zu einer Kopplung mit der Windabweisereinheit und ein Endkappenelement zu einer Kopplung mit einer Federschiene der Wischblattvorrichtung. Das Dichtungselement ist insbesondere zu einer Kopplung, insbesondere formschlüssigen Kopplung, mit dem zumindest einen Fluidkanal vorgesehen. Vorzugsweise umfasst das Dichtungselement zu einer Kopplung, insbesondere formschlüssigen Kopplung, mit dem zumindest einen Fluidkanal zumindest ein, vorzugsweise zwei, insbesondere genau zwei, Dichtfortsätze. Vorzugsweise umfasst das Dichtungselement zu einer Kopplung, insbesondere formschlüssigen Kopplung, mit dem zumindest einen Fluidkanal eine Anzahl an Dichtfortsätzen, welche der Anzahl an Fluidkanälen entspricht. Der zumindest eine Dichtfortsatz des Dichtungselements ist insbesondere als Vorsprung, vorzugsweise als zylindrischer Vorsprung an dem Dichtungselement ausgebildet. Der zumindest eine Dichtfortsatz weist einen Querschnitt auf, welcher zu einer passgenauen, insbesondere formschlüssigen Verbindung mit dem zumindest einen Fluidkanal vorgesehen ist. Vorzugsweise weist der zumindest eine Dichtfortsatz eine Haupterstreckungsrichtung auf, welche parallel zu der Haupterstreckungsrichtung des zumindest einen Fluidkanals zumindest in einem montierten Zustand angeordnet ist. Vorzugsweise besteht das Dichtungselement zu einer Abdichtung zumindest teilweise, insbesondere vollständig aus einem elastischen Material, wie insbesondere aus einem Elastomer.

Durch die erfindungsgemäße Ausgestaltung der Wischblattvorrichtung kann insbesondere ein vorteilhafter Abschluss des Fluidkanals bereitgestellt werden. Es kann insbesondere eine vorteilhafte Abdichtung des Fluidkanals erreicht werden. Durch die erfindungsgemäße Ausgestaltung der Wischblattvorrichtung kann ein montagefreundliches Wischblatt ausgebildet werden. Insbesondere kann eine Endkappe einer Wischblattvorrichtung ausgebildet werden, welche mit vorteilhaft geringem Aufwand an zumindest einen Fluidzuleitungskanal angeschlossen werden kann.

Ferner wird vorgeschlagen, dass das Endkappenelement dazu vorgesehen ist in einem montierten Zustand das Dichtungselement in einer Presspassung an die Windabweisereinheit anzupressen. Das Endkappenelement ist insbesondere zu einer formschlüssigen Kopplung mit einer Federschiene vorgesehen. Vorzugsweise sind das Dichtungselement und das Endkappenelement der Endkappeneinheit zu einer passgenauen, insbesondere unverlierbaren, Kopplung miteinander ausgebildet. Vorzugsweise gleicht der Querschnitt des Endkappenelements zumindest im Wesentlichen dem Querschnitt der Windabweisereinheit. Vorzugsweise ist die Form des Querschnitts des Endkappenelements, geschnitten entlang einer Ebene senkrecht zur Haupterstreckungsachse der Windabweisereinheit im montierten Zustand der Endkappeneinheit, zumindest im Wesentlichen gleich der Form und Größe des Querschnitts entlang derselben Ebene der Windabweisereinheit. Vorzugsweise ist das Endkappenelement zu einer formschlüssigen Verbindung mit der Windabweisereinheit in einem montierten Zustand auf das Dichtungselement und auf die Windabweisereinheit aufgesteckt, wobei das Dichtungselement in einem montierten Zustand zwischen der Windabweisereinheit und dem Endkappenelement komprimiert wird. Vorzugsweise ist das Endkappenelement zu einer Presspassungsverbindung mit der Windabweisereinheit in einem montierten Zustand auf das Dichtungselement und auf die Windabweisereinheit gesteckt, wobei das Endkappenelement zu einer Sicherung insbesondere mit der Federschiene verrastet. Unter einer "Federschiene" soll insbesondere ein makroskopisches Element verstanden werden, das zumindest eine Erstreckung aufweist, die in einem normalen Betriebszustand um zumindest 10 %, insbesondere um wenigstens 20 %, vorzugsweise um mindestens 30 % und besonders vorteilhaft um zumindest 50 % elastisch veränderbar ist, und das insbesondere eine von einer Veränderung der Erstreckung abhängige und vorzugsweise zu der Veränderung proportionale Gegenkraft erzeugt, die der Veränderung entgegenwirkt. Vorzugsweise ist die Federschiene zumindest teilweise aus einem Federstahl ausgebildet. Vorzugsweise weist die Federschiene in einem unbelasteten Zustand im Wesentlichen eine Form eines gebogenen Stabs und besonders vorteilhaft eines abgeflachten gebogenen Stabs auf. Besonders vorteilhaft ist eine Krümmung der Federschiene entlang einer Längserstreckung in einem unbelasteten Zustand größer als eine Krümmung einer Fahrzeugoberfläche eines Kraftfahrzeugs, insbesondere einer Fahrzeugscheibe, über welche die Federschiene in wenigstens einem Betriebszustand geführt wird. Unter einer "Erstreckung" eines Elements soll insbesondere ein maximaler Abstand zweier Punkte einer senkrechten Projektion des Elements auf eine Ebene verstanden werden. Unter einem "makroskopischen Element" soll insbesondere ein Element mit einer Erstreckung von zumindest 1 mm, insbesondere von wenigstens 5 mm und vorzugsweise von mindestens 10 mm verstanden werden. Dadurch kann insbesondere eine vorteilhafte Dichtwirkung des Dichtungselements erreicht werden. Ferner kann dadurch eine vorteilhaft einfache Montage der Endkappeneinheit erreicht werden. Vorteilhaft ist die Endkappeneinheit mit der Windabweisereinheit unabhängig von dem Dichtungselement verbunden, wobei insbesondere abhängig von einer Ausführung der Wischblattvorrichtung eine Montage mit oder ohne das Dichtungselement erfolgen kann.

Nach der Erfindung weist das Dichtungselement eine Querschnittsform auf, welche der Querschnittsform der Windabweisereinheit zumindest im Wesentlichen gleicht. Nach der Erfindung gleicht die Querschnittsform des Dichtungselements an einer der Windabweisereinheit zugewandten Seite im montierten Zustand zumindest im Wesentlichen der Querschnittsform der Windabweisereinheit. Darunter, dass "ein Querschnitt zumindest im Wesentlichen einem weiteren Querschnitt gleicht" soll vorteilhaft verstanden werden, dass die Form und Größe der Außenkontur eines Querschnitts zu mindestens 60 %, bevorzugt mindestens 75 %, besonders bevorzugt zu mindestens 90 % einer Form und Größe der Außenkontur eines weiteren Querschnitts, gemessen am Flächeninhalt und einer Flächeninhaltsdifferenz, gleicht. Dadurch kann insbesondere ein vorteilhaftes Dichtungselement bereitgestellt werden. Es kann insbesondere ein flächiges Abdichten erreicht werden. Ferner kann dadurch vorteilhaft ein flächiges Anpressen an die Windabweisereinheit durch das Endkappenelement erreicht werden.

Des Weiteren wird vorgeschlagen, dass der zumindest eine Fluidkanal dazu vorgesehen ist Wischflüssigkeit zu führen und die Wischflüssigkeit abzugeben. Vorzugsweise ist der Fluidkanal zu einer direkten Abgabe der Wischflüssigkeit vorgesehen, insbesondere frei von zusätzlichen Kanälen. Bevorzugt weist der Fluidkanal Austrittsöffnungen auf, über welche die Wischflüssigkeit direkt abgegeben werden kann. Die Austrittsöffnungen können dabei zusätzlich mit Düseneinsätzen versehen sein. Dadurch kann insbesondere ein vorteilhaft direktes Aufbringen von Wischflüssigkeit erreicht werden. Vorteilhaft wird dadurch der Wischvorgang erleichtert. Vorteilhaft wird die zu wischende Scheibe, insbesondere Schmutz auf der Scheibe, zu einem Wischen mit Wischflüssigkeit befeuchtet und/oder mit einem in der Wischflüssigkeit enthaltenen Dispergiermittel zu einem Wischen vorbereitet. Vorzugsweise wird die Wischflüssigkeit in zumindest eine, insbesondere zwei, bevorzugt genau zwei, Wischrichtung/en vor die Wischblattvorrichtung auf die Scheibe gegeben.

Ferner wird vorgeschlagen, dass die Windabweisereinheit eine von dem zumindest einen Fluidkanal verschiedene Fixierausnehmung ausbildet, die zu einer zumindest teilweise formschlüssigen Fixierung des zumindest einen Dichtungselements der Endkappeneinheit vorgesehen ist. Vorzugsweise ist die zumindest eine Fixierausnehmung als Ausnehmung in der zumindest einen Windabweisereinheit angeordnet. Bevorzugt ist die Fixierausnehmung zumindest in einem Endabschnitt der Windabweisereinheit angeordnet. Insbesondere bei einer Herstellung der Windabweisereinheit in einem Extrusionsverfahren, wäre jedoch auch denkbar, dass sich die Fixierausnehmung entlang der Haupterstreckungsrichtung der Windabweisereinheit durch die gesamte Windabweisereinheit erstreckt. Bevorzugt wird die Fixierausnehmung von der Windabweisereinheit begrenzt. Vorzugsweise verläuft die Haupterstreckungsrichtung der Fixierausnehmung parallel zur Haupterstreckungsachse der Windabweisereinheit. Es ist denkbar, dass die Haupterstreckungsachse in einem Winkel, beispielsweise 15°, zu der Haupterstreckungsachse der Windabweisereinheit verläuft. Die Außenkontur der Fixierausnehmung ist vorzugsweise unstrukturiert ausgebildet. Es ist denkbar, dass die Außenkontur der Fixierausnehmung strukturiert insbesondere beschichtet, insbesondere nanobeschichtet, ausgebildet ist. Vorteilhaft wird eine sichere Verbindung des Dichtungselements mit der Windabweisereinheit ausgebildet. Es kann insbesondere eine zusätzliche Sicherung des Dichtungselements an der Windabweisereinheit erreicht werden.

Ferner wird vorgeschlagen, dass die Fixierausnehmung eine im Wesentlichen dreieckige Querschnittsform aufweist. Vorzugsweise weist die Fixierausnehmung einen zumindest im Wesentlichen dreieckigen Querschnitt auf, entlang einer Ebene senkrecht zur Haupterstreckungsachse der Windabweisereinheit. Alternativ ist denkbar, dass die Fixierausnehmung einen polygonalen, insbesondere zumindest im Wesentlichen quadratischen, Querschnitt, einen elliptischen, insbesondere kreisförmigen, Querschnitt oder einen anderen, einem Fachmann als sinnvoll erscheinenden Querschnitt aufweist. Vorteilhaft wird eine sichere Verbindung des Dichtungselements mit der Windabweisereinheit ausgebildet.

Ferner wird vorgeschlagen, dass das Dichtungselement zumindest einen Fixierfortsatz umfasst, welches zu einer Verbindung mit der zumindest einen Windabweisereinheit vorgesehen ist. Vorzugsweise ist der Fixierfortsatz in Form und Größe an die Fixierausnehmung der Windabweisereinheit angepasst. Vorzugsweise ist der Fixierfortsatz zu einer formschlüssigen Verbindung mit der Fixierausnehmung ausgebildet. Vorzugsweise ist der Fixierfortsatz zu einer Steckverbindung mit der zumindest einen Fixierausnehmung vorgesehen. Alternativ und/oder zusätzlich kann der Fixierfortsatz in die Fixierausnehmung geklebt oder mit weiteren Befestigungsmitteln reversibel oder irreversibel befestigt sein. Vorteilhaft wird eine platzsparende Befestigung der Endkappeneinheit an der Windabweisereinheit erreicht.

Ferner wird vorgeschlagen, dass der Fixierfortsatz eine im Wesentlichen dreieckige Querschnittsform aufweist. Vorzugsweise weist der Fixierfortsatz einen zumindest im Wesentlichen dreieckigen Querschnitt auf, entlang einer Ebene senkrecht zur Haupterstreckungsachse der Windabweisereinheit im montierten Zustand. Insbesondere weist der Fixierfortsatz im Wesentlichen denselben Querschnitt wie die Fixierausnehmung der Windabweisereinheit aufweist. Der Fixierfortsatz weist vorzugsweise in einem Querschnitt entlang einer Ebene senkrecht zur Haupterstreckungsachse der Windabweisereinheit im montierten Zustand einen Querschnitt auf, welcher in Form und Größe dem Querschnitt der Fixierausnehmung der Windabweisereinheit gleicht. Vorzugsweise ist die Fixierausnehmung zu einer formschlüssigen Verbindung, insbesondere Steckverbindung, mit dem Fixierfortsatz vorgesehen. Dadurch kann insbesondere eine vorteilhafte Sicherung des Dichtungselements erreicht werden.

Die erfindungsgemäße Wischblattvorrichtung soll hierbei nicht auf die oben beschriebene Anwendung und Ausführungsform beschränkt sein. Insbesondere kann die erfindungsgemäße Wischblattvorrichtung zu einer Erfüllung einer hierin beschriebenen Funktionsweise eine von einer hierin genannte Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen schematischen Teilausschnitt einer erfindungsgemäßen Wischblattvorrichtung mit einer Windabweisereinheit und mit einer Endkappeneinheit in einer teiltransparenten Darstellung und

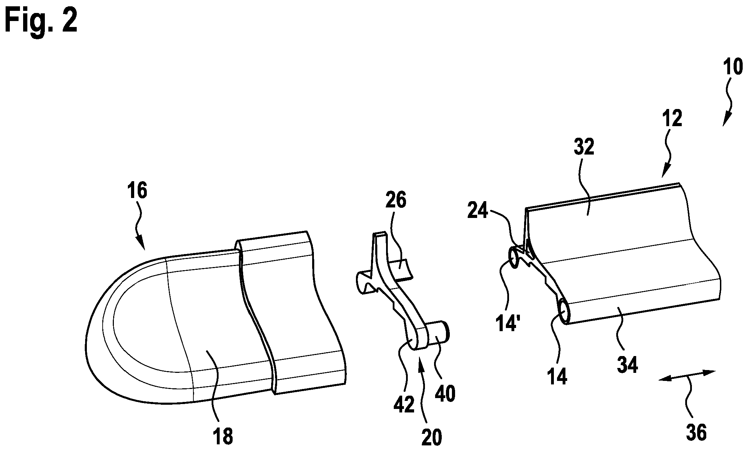

- Fig. 2: einen Teilausschnitt der erfindungsgemäßen Wischblattvorrichtung mit der Windabweisereinheit und mit der Endkappeneinheit in einer Explosionsdarstellung.

### Beschreibung des Ausführungsbeispiels

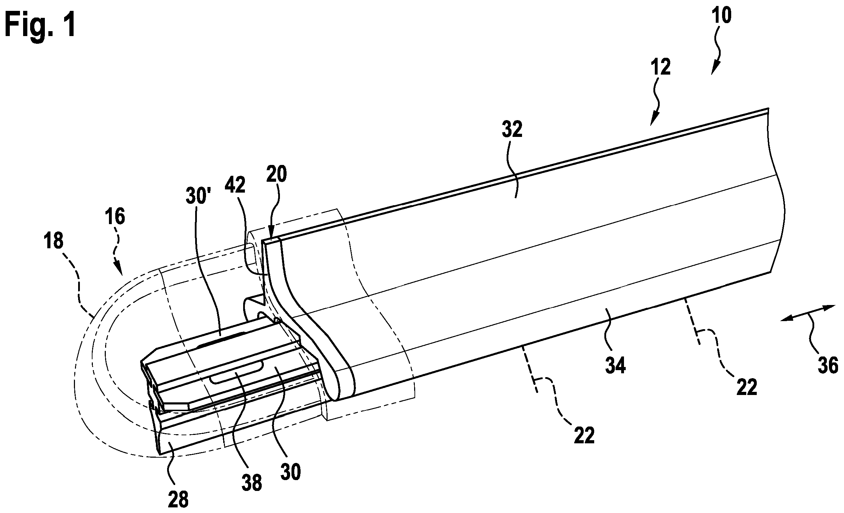

Figur 1 zeigt einen Teilausschnitt einer Wischblattvorrichtung 10. Die Wischblattvorrichtung 10 ist von einem Wischblatt gebildet. Die Wischblattvorrichtung 10 weist einen nicht weiter sichtbaren Wischblattadapter auf. Der Wischblattadapter ist zu einer Kopplung der Wischblattvorrichtung 10 mit einem Wischarm vorgesehen. Die Wischblattvorrichtung 10 umfasst zumindest eine Wischleisteneinheit 28. Die Wischleisteneinheit 28 umfasst zumindest einen Wischgrundkörper und eine Wischlippe. Der Wischgrundkörper und die Wischlippe sind verbunden, insbesondere einteilig, ausgebildet. Die Wischblattvorrichtung 10 umfasst zwei Federschienen 30, 30'. Der Wischgrundkörper der Wischleisteneinheit 28 bildet zwei Federschienenaufnahmen aus. Die Federschienenaufnahmen sind jeweils von außenliegenden Nuten gebildet. Die Federschienenaufnahmen sind zu einer Aufnahme der zwei Federschienen 30, 30' ausgebildet. Die Wischblattvorrichtung 10 weist eine Windabweisereinheit 12 auf. Auf einer der Wischlippe abgewandten Seite des Wischgrundkörpers ist die Windabweisereinheit 12 angeordnet. Die Windabweisereinheit 12 bildet einen Spoiler der Wischblattvorrichtung 10 aus.

Die Windabweisereinheit 12 weist einen Spoilerbereich 32 und einen Befestigungsbereich 34 zu einer Fixierung der Windabweisereinheit 12 an den Federschienen 30, 30' auf.

Ferner weist die Wischblattvorrichtung 10 zumindest einen Fluidkanal 14, 14' auf. Die Wischblattvorrichtung 10 weist zwei Fluidkanäle 14, 14' auf. Die Fluidkanäle 14, 14' sind zumindest teilweise von der Windabweisereinheit 12 ausgebildet. Die Fluidkanäle 14, 14' sind in die Windabweisereinheit 12 eingebracht. Die Fluidkanäle 14, 14' sind in den Befestigungsbereich 34 der Windabweisereinheit 12 eingebracht. Die Fluidkanäle 14, 14' sind jeweils von zylindrischen Kanälen gebildet, welche materiell von der Windabweisereinheit 12 begrenzt sind. Die Fluidkanäle 14, 14' erstrecken sich entlang einer Haupterstreckungsrichtung 36 der Wischblattvorrichtung 10 über eine gesamte Erstreckung der Windabweisereinheit 12. Die Fluidkanäle 14, 14' sind jeweils von einer in einem Extrusionsverfahren der Windabweisereinheit 12 eingebrachten Ausnehmung gebildet. Die Fluidkanäle 14 ,14' sind dazu vorgesehen Wischflüssigkeit 22 zu führen und die Wischflüssigkeit 22 abzugeben. Die Fluidkanäle 14 ,14' weisen Austrittsöffnungen auf, über welche die Wischflüssigkeit 22 direkt abgegeben werden kann. Die Austrittsöffnungen sind insbesondere senkrecht zu der Haupterstreckungsrichtung 36 der Wischblattvorrichtung 10 in die Windabweisereinheit 12 eingebracht. Die Austrittsöffnungen können dabei zusätzlich mit Düseneinsätzen versehen sein. Die Fluidkanäle 14 ,14' werden bedarfsweise nicht weiter sichtbar über eine Wischwasserpumpe eines Kraftfahrzeugs mit Wischflüssigkeit 22 versorgt.

Ferner bildet die Windabweisereinheit 12 eine von den Fluidkanälen 14, 14' verschiedene Fixierausnehmung 24 aus. Die Fixierausnehmung 24 ist in dem Spoilerbereich 32 der Windabweisereinheit 12 eingebracht. Die Fixierausnehmung 24 erstreckt sich entlang der Haupterstreckungsrichtung 36 der Wischblattvorrichtung 10 über eine gesamte Erstreckung der Windabweisereinheit 12. Die Fixierausnehmung 24 weist eine im Wesentlichen dreieckige Querschnittsform auf.

Die Wischblattvorrichtung 10 umfasst eine Endkappeneinheit 16. Die Wischblattvorrichtung 10 umfasst ferner eine nicht weiter sichtbare weitere Endkappeneinheit 16. Die Endkappeneinheit 16 ist im montierten Zustand an einem Ende der Haupterstreckungsrichtung 36 der Wischblattvorrichtung 10 angeordnet. Die Endkappeneinheit 16 ist dazu vorgesehen die Windabweisereinheit 12 seitlich zu begrenzen und zumindest teilweise ein Ende der Windabweisereinheit 12 abzudecken. Die Endkappeneinheit 16 ist mehrteilig ausgebildet. Die Endkappeneinheit 16 ist zweiteilig ausgebildet. Die Endkappeneinheit 16 weist ein Endkappenelement 18 auf. Das Endkappenelement 18 ist dazu vorgesehen ein Ende der Windabweisereinheit 12 abzudecken. Das Endkappenelement 18 ist ferner zu einer Steckverbindung mit den Federschienen 30, 30' vorgesehen. Das Endkappenelement 18 ist dazu vorgesehen, in einem montierten Zustand nicht weiter sichtbar in Ausnehmungen 38 der Federschienen 30, 30' rastend einzugreifen. Zudem ist das Endkappenelement 18 zu einer führenden Aufnahme eines Endbereichs der Federschienen 30, 30' vorgesehen. Das Endkappenelement 18 ist in der Figur 1 transparent dargestellt.

Die Endkappeneinheit 16 weist ferner ein Dichtungselement 20 auf. Das Dichtungselement 20 ist dazu vorgesehen ein der Endkappeneinheit 16 zugewandtes Ende der Fluidkanäle 14, 14' abzudichten. Das Dichtungselement 20 ist zu einer formschlüssigen Kopplung mit den Fluidkanälen 14, 14' vorgesehen. Das Dichtungselement 20 umfasst zu einer formschlüssigen Kopplung mit den Fluidkanälen 14, 14' zwei Dichtfortsätze 40. Die Dichtfortsätze 40 des Dichtungselements 20 sind jeweils als zylindrischer Vorsprung an einem Grundkörper 42 des Dichtungselements 20 ausgebildet. Die Dichtfortsätze 40 des Dichtungselements 20 weisen jeweils einen Querschnitt auf, welcher zu einer passgenauen Verbindung mit den Fluidkanälen 14, 14' vorgesehenen ist. Die Dichtfortsätze 40 dienen zu einem Abschluss und zu einer Abdichtung der Fluidkanäle 14, 14'. Ferner weist das Dichtungselement 20 eine Querschnittsform auf, welche der Querschnittsform der Windabweisereinheit 12 zumindest im Wesentlichen gleicht. Der Grundkörper 42 des Dichtungselements 20 weist eine Querschnittsform auf, welche der Querschnittsform der Windabweisereinheit 12 zumindest im Wesentlichen gleicht.

Die Fixierausnehmung 24 der Windabweisereinheit 12 ist zu einer formschlüssigen Fixierung des Dichtungselements 20 der Endkappeneinheit 16 vorgesehen. Das Dichtungselement 20 weist dazu einen Fixierfortsatz 26 auf, welcher zu einer Verbindung mit der zumindest einen Windabweisereinheit 12 vorgesehen ist. Der Fixierfortsatz 26 ist dazu vorgesehen, in einem montierten Zustand in die Fixierausnehmung 24 einzugreifen. Der Fixierfortsatz 26 weist eine im Wesentlichen dreieckige Querschnittsform auf.

Ferner ist das Endkappenelement 18 zu einer Sicherung des Dichtungselements 20 an der Windabweisereinheit 12 vorgesehen. Das Endkappenelement 18 sichert das Dichtungselement 20 in einem mit den Federschienen 30, 30' verrasteten Zustand an der Windabweisereinheit 12. Das Endkappenelement 18 ist dazu vorgesehen in einem montierten Zustand das Dichtungselement 20 in einer Presspassung an die Windabweisereinheit 12 anzupressen. Das Dichtungselement 20 besteht aus einem elastischen Material und wird in einem montierten Zustand des Endkappenelements 18 zwischen dem Endkappenelement 18 und der Windabweisereinheit 12 komprimiert. Das Endkappenelement 18 wird dazu bei einer Montage mit einer Komprimierungskraft zur Komprimierung des Dichtungselements 20 auf die Federschienen 30, 30' aufgeschoben, wobei dabei das Dichtungselement 20 komprimiert wird. Das Endkappenelement 18 weist dazu ferner eine stirnseitige Kontaktfläche zur einer flächigen Kontaktierung des Grundkörpers 42 des Dichtungselements 20 auf. Das Dichtungselement 20 ist von dem Endkappenelement 18 getrennt ausgebildet, wobei das Endkappenelement 18 zu einer Sicherung des Dichtungselements 20 vorgesehen ist.

## Patentansprüche

1. Wischblattvorrichtung mit zumindest einer Windabweisereinheit (12), mit zumindest einem Fluidkanal (14, 14'), welcher zumindest teilweise von der Windabweisereinheit (12) ausgebildet ist, und mit zumindest einer Endkappeneinheit (16), welche dazu vorgesehen ist die Windabweisereinheit (12) seitlich zu begrenzen und zumindest teilweise ein Ende der Windabweisereinheit (12) abzudecken, wobei die zumindest eine Endkappeneinheit (16) mehrteilig, insbesondere zweiteilig, ausgebildet ist und zumindest ein Endkappenelement (18) und zumindest ein Dichtungselement (20) aufweist, welches dazu vorgesehen ist ein der Endkappeneinheit (16) zugewandtes Ende des zumindest einen Fluidkanal (14, 14') zumindest im Wesentlichen abzudichten, wobei das Endkappenelement (18) zu einer Sicherung des Dichtungselements (20) an der Windabweisereinheit (12) vorgesehen ist, wobei das Dichtungselement (20) eine Querschnittsform aufweist, welche der Querschnittsform der Windabweisereinheit (12) zumindest im Wesentlichen gleicht und der Querschnitt des Endkappenelements (18) zumindest im Wesentlichen dem Querschnitt der Windabweisereinheit (12) gleicht, **dadurch gekennzeichnet, dass** das Endkappenelement (18) dazu vorgesehen ist, ein Ende der Windabweisereinheit (12) abzudecken.

2. Wischblattvorrichtung nach Anspruch 1, **dadurch gekennzeichnet, dass** das Endkappenelement (18) dazu vorgesehen ist in einem montierten Zustand das Dichtungselement (20) in einer Presspassung an die Windabweisereinheit (12) anzupressen.

3. Wischblattvorrichtung nach einem der vorhergehenden Ansprüche,
**dadurch gekennzeichnet, dass** der zumindest eine Fluidkanal (14) dazu vorgesehen ist Wischflüssigkeit (22) zu führen und die Wischflüssigkeit (22) abzugeben.

4. Wischblattvorrichtung nach einem der vorhergehenden Ansprüche,
**dadurch gekennzeichnet, dass** die Windabweisereinheit (12) eine von dem zumindest einen Fluidkanal (14, 14') verschiedene Fixierausnehmung (24) ausbildet, die zu einer zumindest teilweise formschlüssigen Fixierung des zumindest einen Dichtungselements (20) der Endkappeneinheit (16) vorgesehen ist.

5. Wischblattvorrichtung nach einem der vorhergehenden Ansprüche, **dadurch gekennzeichnet, dass** die Fixierausnehmung (24) eine im Wesentlichen dreieckige Querschnittsform aufweist.

6. Wischblattvorrichtung nach einem der vorhergehenden Ansprüche, **dadurch gekennzeichnet, dass** das Dichtungselement (20) zumindest einen Fixierfortsatz (26) umfasst, welcher zu einer Verbindung mit der zumindest einen Windabweisereinheit (12) vorgesehen ist.

7. Wischblattvorrichtung nach einem der vorhergehenden Ansprüche, **dadurch gekennzeichnet, dass** der Fixierfortsatz (26) eine im Wesentlichen dreieckige Querschnittsform aufweist.

## Claims

1. Wiper-blade device having at least one wind-deflector unit (12), having at least one fluid channel (14, 14') which is formed at least partially by the wind-deflector unit (12), and having at least one end-cap unit (16) which is intended for lateral delimitation of the wind-deflector unit (12) and for at least partial covering of an end of the wind-deflector unit (12), wherein the at least one end-cap unit (16) is of multi-part, in particular two-part, form and has at least one end-cap element (18) and at least one seal element (20), which is intended for at least substantial sealing of an end, directed towards the end-cap unit (16), of the at least one fluid channel (14, 14'), wherein the end-cap element (18) is intended for securing of the seal element (20) to the wind-deflector unit (12), wherein the seal element (20) has a cross-sectional shape which at least substantially resembles the cross-sectional shape of the wind-deflector unit (12) and the cross section of the end-cap element (18) at least substantially resembles the cross section of the wind-deflector unit (12), **characterized in that** the end-cap element (18) is intended for covering of an end of the wind-deflector unit (12).

2. Wiper-blade device according to Claim 1, **characterized in that** the end-cap element (18) is intended for pressing of the seal element (20) onto the wind-deflector unit (12) with a press fit in a mounted state.

3. Wiper-blade device according to either of the preceding claims, **characterized in that** the at least one fluid channel (14) is intended for guidance of wiping liquid (22) and for dispensing of the wiping liquid (22).

4. Wiper-blade device according to one of the preceding claims, **characterized in that** the wind-deflector unit (12) forms a fixing cutout (24) which is different from the at least one fluid channel (14, 14'), said fixing cutout being intended for at least partially form-fitting fixing of the at least one seal element (20) of the end-cap unit (16).

5. Wiper-blade device according to one of the preceding claims, **characterized in that** the fixing cutout (24) has a substantially triangular cross-sectional shape.

6. Wiper-blade device according to one of the preceding claims, **characterized in that** the seal element (20) comprises at least one fixing extension (26) which is intended for connection to the at least one wind-deflector unit (12).

7. Wiper-blade device according to one of the preceding claims, **characterized in that** the fixing extension (26) has a substantially triangular cross-sectional shape.

## Revendications

1. Dispositif de balai d'essuie-glace avec au moins une unité déflectrice de vent (12), avec au moins un canal de fluide (14, 14'), qui est formé au moins en partie par l'unité déflectrice de vent (12), et avec au moins une unité de capuchon d'extrémité (16) qui est prévue pour délimiter latéralement l'unité déflectrice de vent (12) et pour recouvrir au moins en partie une extrémité de l'unité déflectrice de vent (12), l'au moins une unité de capuchon d'extrémité (16) étant formée en plusieurs parties, en particulier en deux parties, et comportant au moins un élément de capuchon d'extrémité (18) et au moins un élément d'étanchéité (20), qui est prévu pour étanchéifier au moins sensiblement une extrémité de l'au moins un canal de fluide (14, 14') tournée vers l'unité de capuchon d'extrémité (16), l'élément de capuchon d'extrémité (18) étant prévu pour bloquer l'élément d'étanchéité (20) sur l'unité déflectrice de vent (12), l'élément d'étanchéité (20) présentant une forme de section transversale qui est au moins sensiblement identique à la forme de section transversale de l'unité déflectrice de vent (12) et la section transversale de l'élément de capuchon d'extrémité (18) étant au moins sensiblement identique à la section transversale de l'unité déflectrice de vent (12), **caractérisé en ce que** l'élément de capuchon d'extrémité (18) est prévu pour recouvrir une extrémité de l'unité déflectrice de vent (12).

2. Dispositif de balai d'essuie-glace selon la revendication 1, **caractérisé en ce que** l'élément de capuchon d'extrémité (18) est prévu pour presser l'élément d'étanchéité (20) contre l'unité déflectrice de vent (12) par ajustement serré dans un état monté.

3. Dispositif de balai d'essuie-glace selon l'une des revendications précédentes, **caractérisé en ce que** l'au moins un canal de fluide (14) est prévu pour guider le liquide lave-glace (22) et pour évacuer le liquide lave-glace (22).

4. Dispositif de balai d'essuie-glace selon l'une des revendications précédentes, **caractérisé en ce que** l'unité déflectrice de vent (12) forme un évidement de fixation (24) différent de l'au moins un canal de fluide (14, 14'), qui est prévu pour la fixation au moins en partie par complémentarité de forme de l'au moins un élément d'étanchéité (20) de l'unité de capuchon d'extrémité (16).

5. Dispositif de balai d'essuie-glace selon l'une des revendications précédentes, **caractérisé en ce que** l'évidement de fixation (24) présente une forme de section transversale sensiblement triangulaire.

6. Dispositif de balai d'essuie-glace selon l'une des revendications précédentes, **caractérisé en ce que** l'élément d'étanchéité (20) comprend au moins un prolongement de fixation (26), qui est prévu pour une liaison à l'au moins une unité déflectrice de vent (12).

7. Dispositif de balai d'essuie-glace selon l'une des revendications précédentes, **caractérisé en ce que** le prolongement de fixation (26) présente une forme de section transversale sensiblement triangulaire.
